# EUROPEAN PATENT APPLICATION

(11) **EP 2 886 429 A1**
(43) Date of publication of application: **24.06.2015**
(21) Application number: 14191886.2
(22) Date of filing: 05.11.2014
(51) Int. Cl.: B62J 1/08, B62K 19/36

(54) **One-piece seat tube for a bicycle**

(71) Applicant: MERIDA INDUSTRY CO., LTD., Meei Gaang Tsuen Ta Tsuen Chang Hwa Hsien (TW)
(72) Inventor: Chou, Chi-Yung, Chang Hwa Hsien (TW)
(74) Representative: Melchior, Robin

(57) **Abstract**

A one-piece seat tube for a bicycle is made by a single forging forming embryo and has a body (10, 10A, 10B, 10C) and a protruding segment (20, 20A, 20B, 20C). The body (10, 10A, 10B, 10C) is hollow and has an annular external surface (11, 11A, 11B, 11C), an upper end, a middle and a lower end. The protruding segment (20, 20A, 20B, 20C) is integrally formed on the external surface (11, 11A, 11B, 11C) of the body (10, 10A, 10B, 10C).

## Description

### BACKGROUND

The present invention relates to a seat tube, and more particularly to a seat tube for a bicycle that can be made of a single piece without welding, can improve the life of the seat tube and can improve the overall mechanical performance properties of the seat tube without interfering with the other components of the bicycle during installation.

With the gradual rise of fitness concepts and environmental awareness, bicycles have been become the prevailing project for leisure and sports. When a frame of a conventional bicycle at the time of production, multiple tubes of the frame are manufactured by an extrusion molding method and the appearance of each one of the tubes can be provided with different visual effects by multiple processes. In addition, each one of the tubes of the frame can be made with different thickness to enable the tube to have the mechanical properties with lightweight, rigid or flexible, etc.

However, after manufacturing the tubes of the frame of the conventional bicycle, each one of the tubes such as a seat tube must be connected with other non-tubular members such as shock absorbers, bearing mounts, supporting brackets or reinforcing slices by a welding process or a gluing binding process to form the seat tube of the frame of the conventional bicycle. Therefore, the seat tube of the frame of the conventional bicycle is a combined type, and the quality and the life of the seat tube will be affected by poor manual welding and the retraction situation of the heat affected zone and the weld beads after welding.

Furthermore, the combined type seat tube of the frame of the conventional bicycle is made of a tube and other non-tubular members, and the combined type seat tube may have different structural rigidities and this will affect the mechanical properties of the seat tube. Additionally, the connecting section and the weld beads between two different components of the seat tube will increase the total weight of the seat tube. Moreover, properly reinforced materials are needed to be used on the poor performance of the location of the seat tube and this will limit the lightweight design of the frame of the conventional bicycle. The connecting types of welding and gluing binding are not only formed protrusions on or recesses in an external surface of the seat tube to affect the appearance of the seat tube and the structures of the protrusions and the weld beads may also interface with other components of the conventional bicycle in assembly.

To overcome the shortcomings, the present invention provides a one-piece seat tube for a bicycle to mitigate or obviate the aforementioned problems.

The main objective of the present invention is to provide a one-piece seat tube for a bicycle that can be made of a single piece without welding, can improve the life of the seat tube and can improve the overall mechanical performance properties of the seat tube without interfering with the other components of the bicycle during installation.

### SUMMARY OF THE INVENTION

The one-piece seat tube for a bicycle in accordance with the present invention is made by a single forging forming embryo and has a body and a protruding segment. The body is hollow and has an annular external surface, an upper end, a middle and a lower end. The protruding segment is integrally formed on the external surface of the body.

Other objectives, advantages and novel features of the invention will become more apparent from the following detailed description when taken in conjunction with the accompanying drawings.

### BRIEF DESCRIPTION OF THE DRAWINGS

The invention will be elucidated on the basis of an exemplary embodiment shown in the attached drawings, in which:
Fig. 1 is a side view of a first embodiment of a one-piece seat tube for a bicycle in accordance with the present invention;
Fig. 2 is a cross sectional side view of the one-piece seat tube in Fig. 1;
Fig. 3 is a perspective view of a second embodiment of a one-piece seat tube for a bicycle in accordance with the present invention;
Fig. 4 is a side view of the one-piece seat tube in Fig. 3;
Fig. 5 is a perspective view of a third embodiment of a one-piece seat tube for a bicycle in accordance with the present invention;
Fig. 6 is a side view of the one-piece seat tube in Fig. 5;
Fig. 7 is a perspective view of a fourth embodiment of a one-piece seat tube for a bicycle in accordance with the present invention; and
Fig. 8 is a side view of the one-piece seat tube in Fig. 7.

### DETAILED DESCRIPTION OF THE INVENTION

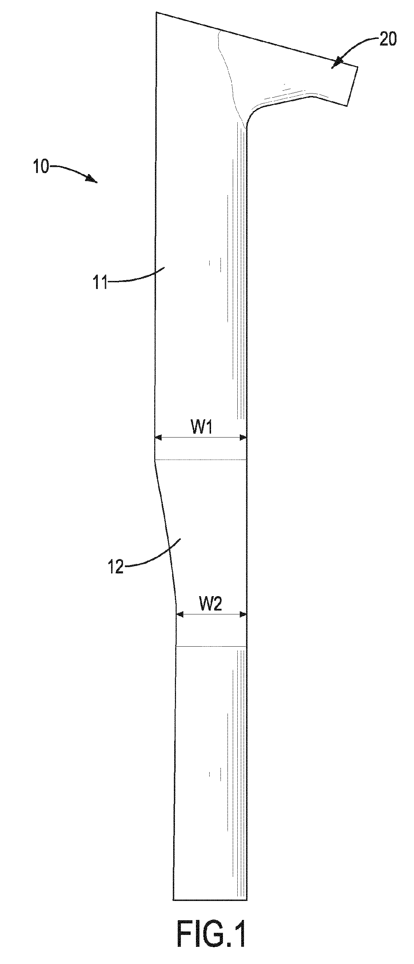

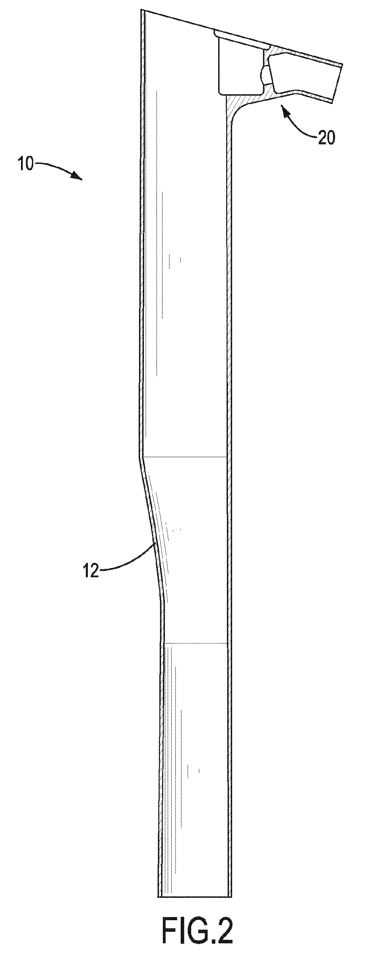

With reference to Figs. 1 and 2, a first embodiment of a one-piece seat tube for a bicycle in accordance with the present invention is made by a single forging forming embryo and is processed by an appearance setting, an internal tubing process and a size processing. The one-piece seat tube for a bicycle has a body 10 and a protruding segment 20.

The body 10 is hollow and has an annular external surface 11, an upper end, a middle, a lower end, a thickness and a tapered section 12. The tapered section 12 is formed on the external surface 11 of the body 10 at the middle of the body 10 along a direction from the upper end of the body 10 to the lower end of the body 10. Preferably, a section of the body 10 that is formed on the body 10 above the tapered section 12 has a first width W1, and the tapered section 12 has a smallest width being defined as a second width W2. A ratio (W1/W2 ) between the first width W1 of the body 10 and the second width W2 of the tapered section 12 is less than or equal to 3.

The protruding segment 20 may be a seat connecting block for a bicycle, is obliquely and integrally formed on and protrudes from the external surface 11 of the body 10 at the upper end of the body 10 and has a thickness. The thickness of the protruding segment 20 is same as the thickness of the body 10.

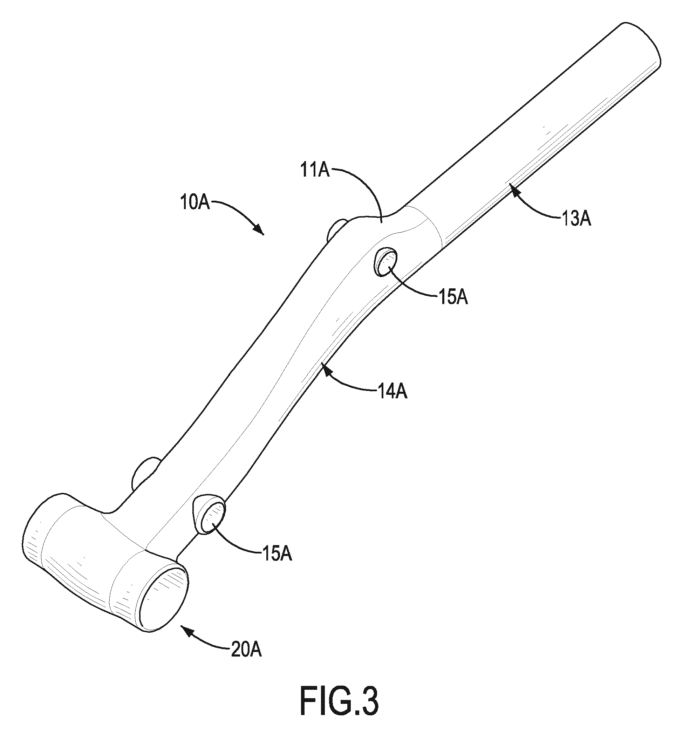

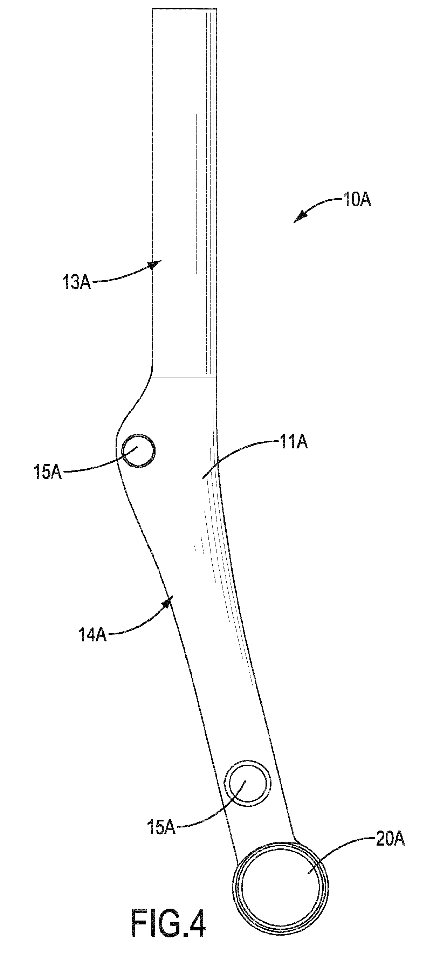

With reference to Figs. 3 and 4, a second embodiment of a one-piece seat tube in accordance with the present invention. The body 10A has an upper end, a middle, a lower end, a straight section 13A, an inclined section 14A and multiple linking pipes 15A. The straight section 13A is formed on the body 10A between the upper end and the middle of the body 10A. The inclined section 14A is formed on the body 10A between the middle and the lower end of the body 10A, is formed with the straight section 13A with an angle and has two opposite sides. The linking pipes 15A are transversally formed on and protrude from the opposite sides of the inclined section 14A between the straight section 13A and the lower end of the body 10A. Furthermore, the linking pipes 15A that are formed on and protrude from one of the opposite sides of the inclined section 14A respectively align with the linking pipes 15A that are formed on and protrude from the other opposite side of the inclined section 14A. The protruding segment 20A may be a bottom tube for a bicycle and is transversally formed on and protrudes from the lower end of the body 10A. Preferably, the protruding segment 20A is transversally formed on and protrudes from the inclined section 14A opposite to the straight section 13A and is parallel with the linking pipes 15A.

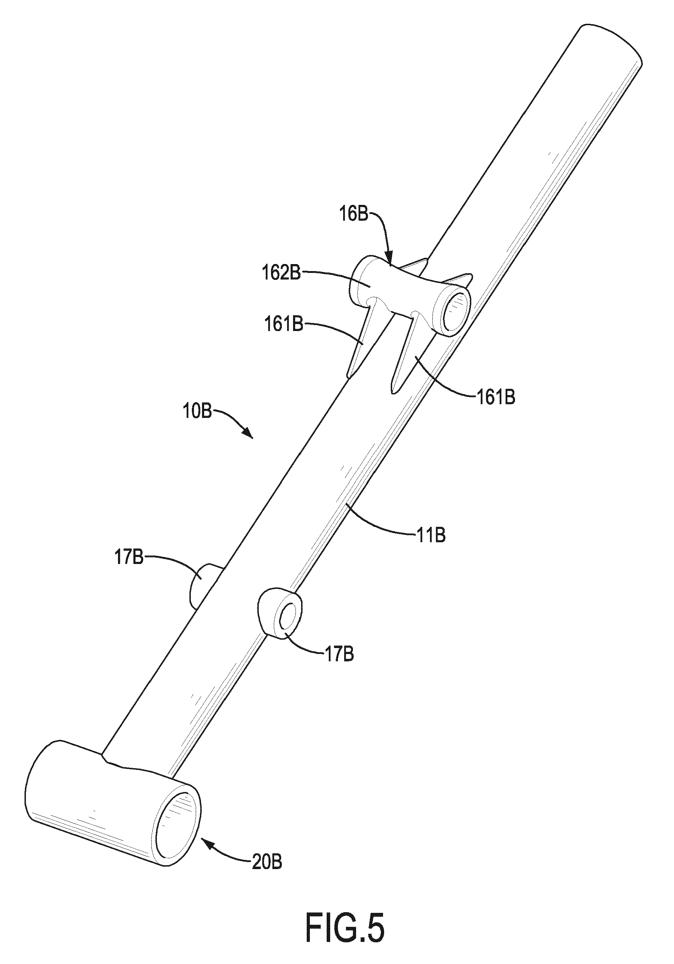

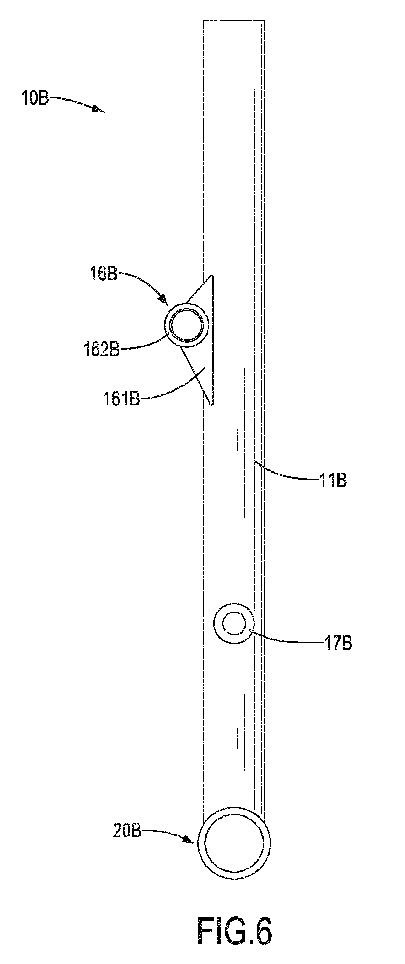

With reference to Figs. 5 and 6, a third embodiment of a one-piece seat tube in accordance with the present invention. The body 10B is a hollow tube with a single diameter and has an annular external surface 11B, an upper end, a middle, a lower end, a connecting frame 16B and two linking pipes 17B. The connecting frame 16B may be a shock connecting mount for a bicycle, is formed on and protrudes from the external surface 11B of the body 10B between the middle and the upper end of the body 10B and has two connecting slices 161B and a mounting pipe 162B. The connecting slices 161B are formed on and protrude from the external surface 11B of the body 10B at an interval and face to each other. The mounting pipe 162B is formed with the connecting slices 161B above the external surface 11B of the body 10B. The linking pipes 17B are formed on and protrude from the external surface 11B of the body 10B between the connecting frame 16B and the lower end of the body 10B and align with each other. The protruding segment 20B may be a bottom tube for a bicycle and is transversally formed on and protrudes from the lower end of the body 10B and is parallel with the linking pipes 17B.

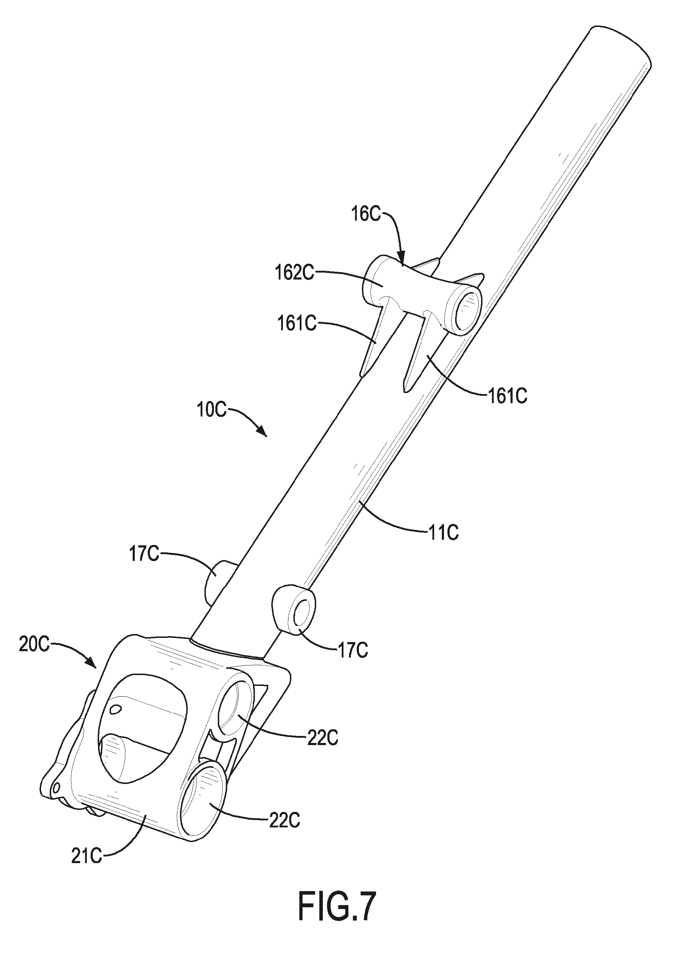

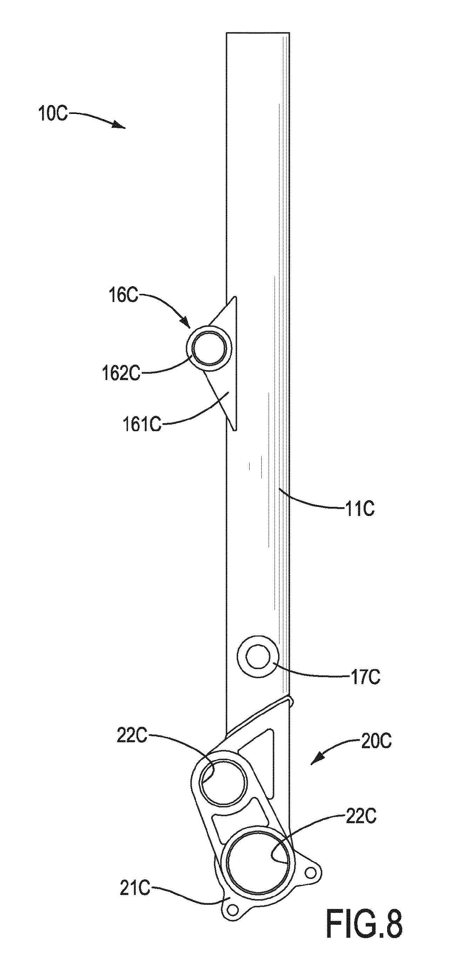

With reference to Figs. 7 and 8, a fourth embodiment of a one-piece seat tube in accordance with the present invention. The body 10C is a hollow tube with a single diameter and has an annular external surface 11C, an upper end, a middle, a lower end, a connecting frame 16C and two linking pipes 17C. The connecting frame 16C may be a shock connecting mount for a bicycle, is formed on and protrudes from the external surface 11C of the body 10C between the middle and the upper end of the body 10C and has two connecting slices 161C and a mounting pipe 162C. The connecting slices 161C are formed on and protrude from the external surface 11C of the body 10C at an interval and face to each other. The mounting pipe 162C is formed with the connecting slices 161C above the external surface 11C of the body 10C. The linking pipes 17C are formed on and protrude from the external surface 11C of the body 10C between the connecting frame 16C and the lower end of the body 10C and align with each other. The protruding segment 20C may be a bottom tube for a bicycle, is transversally formed on and protrudes from the lower end of the body 10C and has a linking frame 21C and at least two connecting pipes 22C. The linking frame 21C is hollow, is formed on and protrudes from the lower end of the body 10C. The at least two connecting pipes 22C are formed in the linking frame 21C and are parallel with each other.

According to the above-mentioned features and structures, the one-piece seat tube for a bicycle in accordance with the present invention is made by a single piece and the quality and the life of the seat tube will not be affected by poor manual welding and the retraction situation of the heat affected zone and the weld beads that are formed by welding. Furthermore, the body 10, 10A, 10B, 10C and the protruding segment 20, 20A, 20B, 20C of the one-piece seat tube are formed with each other by a same material, and the one-piece seat tube can have the same structural rigidity to provide a preferred mechanical property to the one-piece seat tube. In addition, since the one-piece seat tube has the same structural rigidity and doesn't need other reinforced materials to reinforce the structural strength of the one-piece seat tube. Then, the total weight of the one-piece seat tube can be reduced to achieve the lightweight requirement of the bicycle. Moreover, the one-piece seat tube is made by a single piece and doesn't have the structures of the protrusions and the weld beads that are formed in a welding process and doesn't interface with other components of the bicycle in assembly.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A one-piece seat tube for a bicycle, **characterized in that** the one-piece seat tube is made by a single forging forming embryo and has:
a body (10, 10A, 10B, 10C) being hollow and having
an external surface (11, 11A, 11B, 11C) being annular;
an upper end;
a middle; and
a lower end; and
a protruding segment (20, 20A, 20B, 20C) integrally formed on the external surface (11, 11A, 11B, 11C) of the body (10, 10A, 10B, 10C).

2. The one-piece seat tube as claimed in claim 1, wherein
the body (10) has a tapered section (12) formed on the external surface (11) of the body (10) at the middle of the body (10) along a direction from the upper end of the body (10) to the lower end of the body (10); and
the protruding segment (20) is obliquely and integrally formed on and protrudes from the external surface (11) of the body (10) at the upper end of the body (10).

3. The one-piece seat tube as claimed in claim 2, wherein the body (10) has a thickness and the protruding segment (20) has a thickness same as the thickness of the body (10).

4. The one-piece seat tube as claimed in claim 2 or 3, wherein the protruding segment (20) is a seat connecting block for the bicycle.

5. The one-piece seat tube as claimed in claim 4, wherein
the body (10) has a section that is formed on the body (10) above the tapered section (12) with a first width (W1);
the tapered section (12) has a smallest width being defined as a second width (W2); and
the one-piece seat tube has a ratio ( ) between the first width (W1) of the body (10) and the second width (W2) of the tapered section (12) being less than or equal to 3.

6. The one-piece seat tube as claimed in claim 1, wherein
the body (10A) has
a straight section (13A) formed on the body (10A) between the upper end and the middle of the body (10A);
an inclined section (14A) formed on the body (10A) between the middle and the lower end of the body (10A), formed with the straight section (13A) with an angle and having two opposite sides; and
multiple linking pipes (15A) transversally formed on and protruding from the opposite sides of the inclined section (14A) between the straight section (13A) and the lower end of the body (10A); and
the protruding segment (20A) is transversally formed on and protrudes from the lower end of the body (10A).

7. The one-piece seat tube as claimed in claim 6, wherein the protruding segment (20A) is transversally formed on and protrudes from the inclined section (14A) opposite to the straight section (13A) and is parallel with the linking pipes (15A).

8. The one-piece seat tube as claimed in claim 1,
wherein
the body (10B, 10C) has
a single diameter;
a connecting frame (16B, 16C) formed on and protruding from the external surface (11B, 11C) of the body (10B, 10C) between the middle and the upper end of the body (10B, 10C) and having
two connecting slices (161B, 161C) formed on and protruding from the external surface (11B, 11C) of the body (10B, 10C) at an interval and facing to each other; and
a mounting pipe (162B, 162C) formed with the connecting slices (161B, 161C) above the external surface (11B, 11C) of the body (10B, 10C); and
two linking pipes (17B, 17C) formed on and protruding from the external surface (11B, 11C) of the body (10B, 10C) between the connecting frame (16B, 16C) and the lower end of the body (10B, 10C) and aligning with each other; and
the protruding segment (20B, 20C) is transversally formed on and protrudes from the lower end of the body (10B, 10C).

9. The one-piece seat tube as claimed in claim 8, wherein the protruding segment (20C) has
a linking frame (21C) being hollow, formed on and protruding from the lower end of the body (10C); and
at least two connecting pipes (22C) formed in the linking frame (21C) and being parallel with each other.

10. The one-piece seat tube as claimed in claim 6 or 7 or 8 or 9, wherein the protruding segment (20A, 20B, 20A) is a bottom tube for a bicycle.

11. The one-piece seat tube as claimed in claim 10, wherein the connecting frame (16B, 16C) is a shock connecting mount for a bicycle.

## Amended claims

### Amended claims in accordance with Rule 137(2) EPC.

1. A one-piece seat tube for a bicycle, **characterized in that** the one-piece seat tube is made of a single piece without welding and has:
a body (10A) being hollow and having
an external surface (11A) being annular;
an upper end;
a middle; and
a lower end;
a straight section (13A) formed on the body (10A) between the upper end and the middle of the body (10A) ;
an inclined section (14A) formed on the body (10A) between the middle and the lower end of the body (10A), formed with the straight section (13A) with an angle and having two opposite sides; and
multiple linking pipes (15A) transversally formed on and protruding from the opposite sides of the inclined section (14A) between the straight section (13A) and the lower end of the body (10A); and
a protruding segment (20A) integrally and transversally formed on and protruding from the external surface (11A) of the body (10A) at the lower end of the body (10A).

2. The one-piece seat tube as claimed in claim 1, wherein the protruding segment (20A) is transversally formed on and protrudes from the inclined section (14A) opposite to the straight section (13A) and is parallel with the linking pipes (15A).

3. The one-piece seat tube as claimed in claim 1 or 2, wherein the protruding segment (20A) is a bottom tube for a bicycle.
